# EUROPEAN PATENT SPECIFICATION

(11) **EP 2 623 541 B1**
(45) Date of publication and mention of the grant of the patent: **13.09.2017**
(21) Application number: 12188929.9
(22) Date of filing: 27.03.2008
(51) Int. Cl.: C08G 73/10, C08L 79/08, C08L 83/10, H01B 3/30, H01B 3/46

(54) **Compositions comprising cross linked polysiloxane/polyimide copolymers and articles derived therefrom**
Zusammensetzungen enthaltend vernetzte Polysiloxan-/Polymidcopolymere und davon abgeleitete Artikel
Compositions comprenant des copolymères de polysiloxane/polyimide réticulés et articles dérivés

(30) Priority: 28.03.2007 US 692404
(43) Date of publication of application: 07.08.2013
(62) Divisional of application: 08827668.8
(73) Proprietor: SABIC Global Technologies B.V., 4612 PX Bergen op Zoom (NL)
(72) Inventor: Haralur, Gurulingamurthy M., 560095 BANGALORE KARNATAKA (IN)
(74) Representative: Office Freylinger

(56) References cited:
- EP-A- 0 448 359
- EP-A- 0 512 692
- EP-A- 0 719 818
- WO-A-2007/149636
- WO-A-2007/149638
- WO-A-2007/149639
- WO-A-2008/112742
- US-A1- 2005 261 456

## Description

### BACKGROUND OF INVENTION

The disclosure relates to polysiloxane/polyimide block copolymers. In particular, the disclosure relates to cross linked (cured) polysiloxane/polyetherimide block copolymers.

Polysiloxane/polyimide block copolymers have been used due to their flame resistance and high temperature stability. In some applications high temperature stability and flexibility is desirable. This combination of properties can be difficult to achieve as many polymer materials that are flexible do not have high temperature stability and polymer materials that have high temperature stability do not have flexibility. Accordingly, a need remains for polysiloxane/polyimide block copolymer compositions having a desired combination of low flammability, high temperature stability, and flexibility.

The patent application EP 0 448 359 A describes a curable resin comprising a resin of the formula 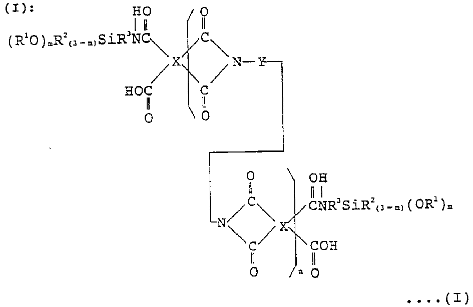 wherein R¹ and R² each are substituted or unsubstituted monovalent hydrocarbon group having 1 to 10 carbon atoms, R³ is a divalent organic group having 1 to 10 carbon atoms, X is a tetravalent organic group having an aromatic ring, Y is a divalent organic group, m is an integer of 1 to 3, and n is an integer of at least 1. The resin is prepared by reacting a polyimide with an aminosilicon compound and can be cured through relatively mild heating into coatings having enhanced substrate adherence and solvent resistance.

The patent application US 2005/261456 A1 describes a partial block polyimide-polysiloxane copolymer comprising repeat unit structures having structural formulae (1) and (2) 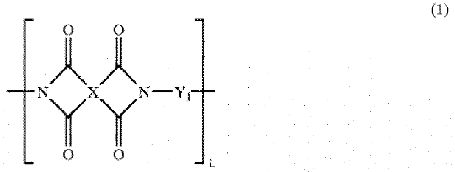 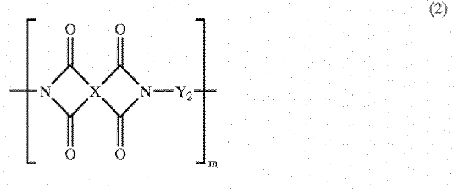 wherein X is an aromatic or aliphatic ring-containing tetravalent organic radical, Y1 is a diamine residue, Y2 is a diaminosiloxane residue, Y1 and Y2 are contained in the copolymer in amounts of 99-20 mol % and 1-80 mol %, respectively, L and m each are an integer of 2-50. The copolymer has good adhesion to substrates, moisture-proof reliability and a low modulus of elasticity.

The patent application WO 2007/149636 A discloses a polysiloxane/polyimide block copolymer having a siloxane content of 5 to 30 weight percent, based on the total weight of the block copolymer and comprising repeating units of Formula (I) 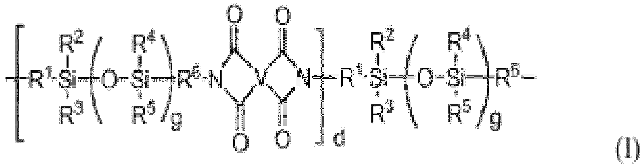 wherein R1-6 are independently at each occurrence selected from the group consisting of substituted or unsubstituted, saturated, unsaturated or aromatic monocyclic and poly cyclic groups having 5 to 30 carbon atoms, substituted or unsubstituted alkyl groups having 1 to 30 carbon atoms and substituted or unsubstituted alkenyl groups having 2 to 30 carbon atoms, V is a tetravalent linker selected from the group consisting of substituted or unsubstituted, saturated, unsaturated or aromatic monocyclic and polycyclic groups having 5 to 50 carbon atoms, substituted or unsubstituted alkyl groups having 1 to 30 carbon atoms, substituted or unsubstituted alkenyl groups having 2 to 30 carbon atoms and combinations comprising at least one of the foregoing linkers, g equals 1 to 30, and d is greater than or equal to 1. Also disclosed are blends of the disclosed block copolymers, methods of making the blends and articles comprising the block copolymer and block copolymer blends.

The patent application WO 2007/149638 A describes a method of making a thermoplastic composition comprises melt blending two polysiloxane/polyimide block copolymers. Both of the block copolymers have extended polysiloxane blocks.

### BRIEF DESCRIPTION OF THE INVENTION

A composition comprising a cross linked polysiloxane/polyimide block copolymer having a siloxane content of 10 to 45 weight percent, based on the total weight of the block copolymer, wherein the cross linked polysiloxane/polyimide block copolymer has a heat distortion temperature measured at 0.44 megaPascals that is at least 5 degrees Celsius greater than the heat distortion temperature of the polysiloxane/polyimide block copolymer prior to cross linking, wherein the cross linked polysiloxane/polyimide block copolymer has an E' modulus measured at 30 degrees Celsius that is greater than or equal to 115% of the E' modulus measured at 30 degrees Celsius of the polysiloxane/polyimide prior to cross linking wherein the polysiloxane/polyimide block copolymer comprises a non-siloxane polyimide block comprising repeating units of Formula (IX) 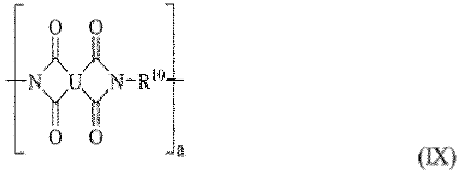 wherein a is more than 1, U is a tetravalent linker comprising a monocyclic group having 5 to 50 carbon atoms, a polycyclic group having 6 to 50 carbon atoms, an alkyl group having 1 to 30 carbon atoms or a combination thereof, and R¹⁰ comprises an aromatic hydrocarbon having 6 to 20 carbon atoms, alkylene groups having 2 to 20 carbons, cycloalkylene groups having 3 to 20 carbon atoms or divalent moieties of Formula (VIII) 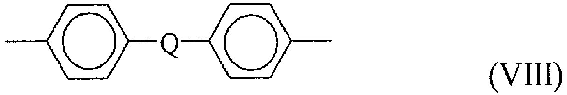 wherein Q is a divalent group comprising -O-, -S-, -C(O)-, -SO₂- -SO-, -C₂H_{2y}- and y is an integer from 1 to 20, and an extended siloxane block comprising repeating units of Formula (I) 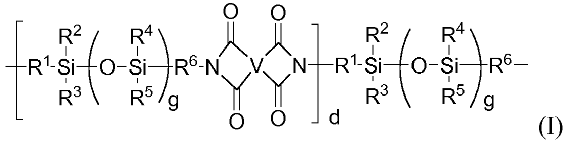 wherein R¹⁻⁶ are independently at each occurrence selected from the group consisting of monocyclic groups having 5 to 45 carbon atoms, polycyclic groups having 10 to 45 carbon atoms, alkyl groups having 1 to 30 carbon atoms and alkenyl groups having 2 to 30 carbon atoms, V is a tetravalent linker selected from the group consisting of monocyclic groups having 5 to 50 carbon atoms, polycyclic groups having 6 to 50 carbon atoms, alkyl groups having 1 to 30 carbon atoms, alkenyl groups having 2 to 30 carbon atoms and combinations comprising at least one of the foregoing linkers, g equals 1 to 30, and d is greater than or equal to 1, wherein E' modulus is determined according to ASTM D4065-01.

The composition may be made by a method comprising: irradiating a composition comprising a polysiloxane/polyimide block copolymer with a dosage of 16 to 130 megaGrays. The polysiloxane/polyimide block copolymer has a siloxane content of 10 to 45 weight percent, based on the total weight of the block copolymer and comprises repeating units of Formula (I).

The composition may be used in a covered conductor comprising a conductor and a covering disposed over the conductor. The covered conductor may be made by extrusion coating a conductor with a composition comprising polysiloxane/polyimide block copolymer having a siloxane content of 10 to 45 weight percent, based on the total weight of the block copolymer and comprising repeating units of Formula (I). After extrusion coating the coated conductor is irradiated with a dosage of 16 to 130 megaGrays.

An article may comprise the composition of the invention.

### BRIEF DESCRIPTION OF THE DRAWINGS

Figure 1 is a schematic representation of a cross-section of conductive wire.
Figures 2 and 3 are perspective views of a conductive wire having multiple layers.

### DETAILED DESCRIPTION

The terms "first," "second"; "primary," and "secondary", as used herein do not denote any order, quantity, or importance, but rather are used to distinguish one element from another.

The terms "a" and "an" do not denote a limitation of quantity, but rather denote the presence of at least one of the referenced item.

"Optional" or "optionally" means that the subsequently described event or circumstance may or may not occur, and that the description includes instances where the event occurs and instances where it does not.

The term "alkyl" is intended to include both C₁₋₃₀ branched and straight-chain, saturated aliphatic hydrocarbon groups having the specified number of carbon atoms. Examples of alkyl include methyl, ethyl, n-propyl, i-propyl, n-butyl, s-butyl, t-butyl, n-pentyl, s-pentyl, n- and s-hexyl, n-and s-heptyl, and, n- and s-octyl. The alkyl group may be substituted or unsubstituted.

The term "alkenyl" is defined as a C₂₋₃₀ branched or straight-chain unsaturated aliphatic hydrocarbon groups having one or more double bonds between two or more carbon atoms. Examples of alkenyl groups include ethenyl, propenyl, butenyl, pentenyl, hexenyl, heptenyl, octenyl and nonenyl and the corresponding C₂₋₁₀ dienes, trienes and quadrienes. The alkenyl group may be substituted or unsubstituted.

The term "alkynyl" is defined as a C₂₋₁₀ branched or straight-chain unsaturated aliphatic hydrocarbon groups having one or more triple bonds between two or more carbon atoms. Examples of alkynes include ethynyl, propynyl, butynyl, pentynyl, hexynyl, heptynyl, octynyl and nonynyl.

The term "substituted" means that one or more hydrogens on the molecule, portion of the molecule, or atom are replaced with substitution groups provided that an atom's normal valency is not exceeded, and that the substitution results in a stable compound. Such "substitution groups" may be selected from the group consisting of:, -OR, -NR'R,, -C(O)R, -SR, -halo, -CN, -NO₂, -SO₂, phosphoryl, imino, thioester, carbocyclic, aryl, heteroaryl, alkyl, alkenyl, bicyclic and tricyclic groups. When a substitution group is a keto (i.e., =O) group, then 2 hydrogens on the atom are replaced. Keto substituents are not present on aromatic moieties. The terms R and R' refer to alkyl groups that may be the same or different.

The description is intended to include all permutations and combinations of the substitution groups on the backbone units specified by Formula I above with the proviso that each permutation or combination can be selected by specifying the appropriate R or substitution groups.

Thus, for example, the term "substituted C₁₋₁₀ alkyl " refers to alkyl moieties containing saturated bonds and having one or more hydrogens replaced by, for example, halogen, carbonyl, alkoxy, ester, ether, cyano, phosphoryl, imino, alkylthio, thioester, sulfonyl, nitro, heterocyclo, aryl, or heteroaryl.

The terms "halo" or "halogen" as used herein refer to fluoro, chloro, bromo, and iodo.

The term "monocyclic" as used herein refers to groups comprising a single ring system. The ring system may be aromatic, heterocyclic, aromatic heterocyclic, a saturated cycloalkyl, or an unsaturated cycloalkyl. The monocyclic group may be substituted or unsubstituted. Monocyclic alkyl groups may have 5 to 12 ring members.

The term "polycyclic" as used herein refers to groups comprising multiple ring systems. The rings may be fused or unfused. The polycyclic group may be aromatic, heterocyclic, aromatic heterocyclic, a saturated cycloalkyl, an unsaturated cycloalkyl, or a combination of two or more of the foregoing. The polycyclic group may be substituted or unsubstituted. Polycyclic groups may have 6 to 20 ring members.

The term "aryl" is intended to mean an aromatic moiety containing the specified number of carbon atoms, such as, but not limited to phenyl, tropone, indanyl or naphthyl.

The terms "cycloalkyl" are intended to mean any stable ring system, which may be saturated or partially unsaturated. Examples of such include, but are not limited to, cyclopropyl, cyclopentyl, cyclohexyl, norbornyl, bicyclo[2.2.2]nonane, adamantyl, or tetrahydronaphthyl (tetralin).

As used herein, the term "heterocycle" or "heterocyclic system" is intended to mean a stable 5- to 7-membered monocyclic or 7- to 10-membered bicyclic heterocyclic ring which is saturated, partially unsaturated, unsaturated, or aromatic, and which consists of carbon atoms and 1 to 4 heteroatoms independently selected from the group consisting of N, O and S and including any bicyclic group in which any of the above-defined heterocyclic rings is fused to a benzene ring. The nitrogen and sulfur heteroatoms may optionally be oxidized. The heterocyclic ring may be attached to its pendant group at any heteroatom or carbon atom that results in a stable structure. In this regard, a nitrogen in the heterocycle may optionally be quaternized. When the total number of S and O atoms in the heterocycle exceeds 1, then these heteroatoms are not adjacent to one another. In some embodiments the total number of S and O atoms in the heterocycle is not more than 1.

As used herein, the term "aromatic heterocyclic system" is intended to mean a stable 5- to 7-membered monocyclic or 7- to 10-membered bicyclic heterocyclic aromatic ring which consists of carbon atoms and from 1 to 4 heteroatoms independently selected from the group consisting of N, O and S. In some embodiments the total number of S and O atoms in the aromatic heterocycle is not more than 1.

The term "independently selected from", "independently, at each occurrence" or similar language, means that the labeled R substitution groups may appear more than once and may be the same or different when appearing multiple times in the same structure. Thus the R¹ may be the same or different than the R⁶ and if the labeled R⁶ substitution group appears four times in a given permutation of Formula I, then each of those labeled R⁶ substitution groups may be, for example, a different alkyl group falling within the definition of R⁶.

Polysiloxane/polyimide block copolymers comprise polysiloxane blocks and polyimide blocks. In random polysiloxane/polyimide block copolymers the size of the siloxane block is determined by the number of siloxy units (analogous to g in Formula (I)) in the monomer used to form the block copolymer. In some non-random polysiloxane/polyimide block copolymers the order of the polyimide blocks and polysiloxane blocks is determined but the size of the siloxane block is still determined by the number of siloxy units in the monomer. In contrast, the polysiloxane/polyimide block copolymers described herein have extended siloxane blocks. Two or more siloxane monomers are linked together to form an extended siloxane oligomer which is then used to form the block copolymer. Polysiloxane/polyimide block copolymers having extended siloxane blocks and a siloxane content of 10 weight percent to 45 weight percent, based on the total weight of the block copolymer, have surprisingly high impact strength. Cross linked polysiloxane/polyimide block copolymers having extended siloxane blocks have significantly higher heat distortion temperatures and E' modulus values.

Polysiloxane/polyimide block copolymers having extended siloxane blocks are made by forming an extended siloxane oligomer and then using the extended siloxane oligomer to make the block copolymer. The extended siloxane oligomer is made by reacting a diamino siloxane and a dianhydride wherein either the diamino siloxane or the dianhydride is present in 10 to 50% molar excess, or, more specifically, 10 to 25% molar excess. "Molar excess" as used in this context is defined as being in excess of the other reactant. For example, if the diamino siloxane is present in 10% molar excess then for 100 moles of dianhydride are present there are 110 moles of diamino siloxane.

Diamino siloxanes have Formula (II) 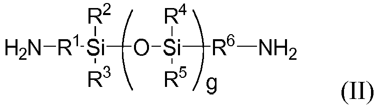 wherein R¹⁻⁶ and g are defined as above. In one embodiment R²⁻⁵ are methyl groups and R¹ and R⁶ are alkylene groups. The synthesis of diamino siloxanes is known in the art and is taught, for example, in U.S. Patent Nos. 5,026,890, 6,339,137, and 6,353,073. In one embodiment R¹ and R⁶ are alkylene groups having 3 to 10 carbons. In some embodiments R¹ and R⁶ are the same and in some embodiments R¹ and R⁶ are different.

Dianhydrides useful for forming the extended siloxane oligomer have the Formula (III) 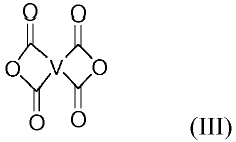 wherein V is a tetravalent linker as described above. Suitable substitutions and/or linkers include carbocyclic groups, aryl groups, ethers, sulfones, sulfides amides, esters, and combinations comprising at least one of the foregoing. Exemplary linkers include tetravalent aromatic radicals of Formula (IV), such as: 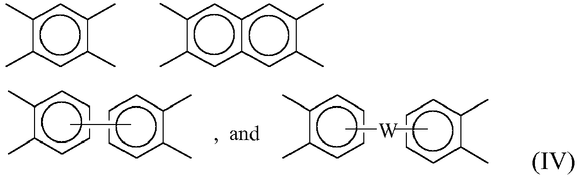 wherein W is a divalent moiety such as -O-, -S-, -C(O)-, -SO₂-, -SO-, -C_{y}H_{2y}- (y being an integer of 1 to 20), and halogenated derivatives thereof, including perfluoroalkylene groups, or a group of the Formula -O-Z-O- wherein the divalent bonds of the -O- or the - O-Z-O- group are in the 3,3', 3,4', 4,3', or the 4,4' positions, and wherein Z includes divalent moieties of Formula (V) 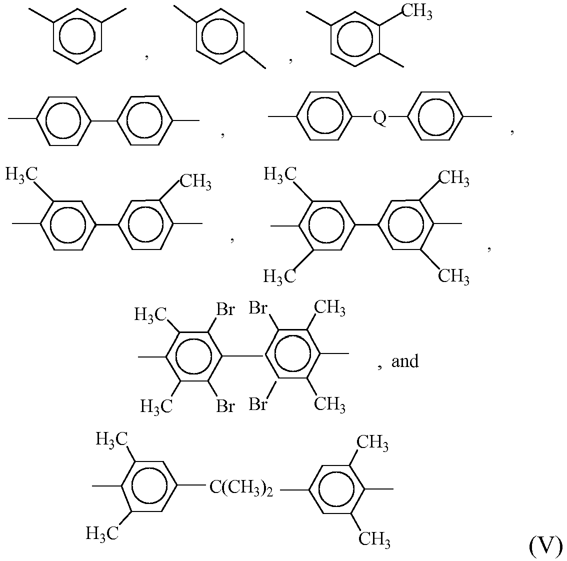 wherein Q includes a divalent moiety comprising -O-, -S-, -C(O)-, -SO₂-, -SO-, -C_{y}H_{2y}- (y being an integer from 1 to 20), and halogenated derivatives thereof, including perfluoroalkylene groups. In some embodiments the tetravalent linker V is free of halogens.

In one embodiment, the dianhydride comprises an aromatic bis(ether anhydride). Examples of specific aromatic bis(ether anhydride)s are disclosed, for example, in U.S. Patent Nos. 3,972,902 and 4,455,410. Illustrative examples of aromatic bis(ether anhydride)s include: 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, as well as mixtures comprising at least two of the foregoing.

The bis(ether anhydride)s can be prepared by the hydrolysis, followed by dehydration, of the reaction product of a nitro substituted phenyl dinitrile with a metal salt of a dihydric phenol compound in the presence of a dipolar, aprotic solvent.

A chemical equivalent to a dianhydride may also be used. Examples of dianhydride chemical equivalents include tetra-functional carboxylic acids capable of forming a dianhydride and ester or partial ester derivatives of the tetra functional carboxylic acids. Mixed anhydride acids or anhydride esters may also be used as an equivalent to the dianhydride. As used throughout the specification and claims "dianhydride" will refer to dianhydrides and their chemical equivalents.

The diamino siloxane and dianhydride can be reacted in a suitable solvent, such as a halogenated aromatic solvent, for example orthodichlorobenzene, optionally in the presence of a polymerization catalyst such as an alkali metal aryl phosphinate or alkali metal aryl phosphonate, for example, sodium phenylphosphonate. In some instances the solvent will be an aprotic polar solvent with a molecular weight less than or equal to 500 to facilitate removal of the solvent from the polymer. The temperature of the reaction can be greater than or equal to 100°C and the reaction may run under azeotropic conditions to remove the water formed by the reaction. In some embodiments the polysiloxane/polyimide block copolymer has a residual solvent content less than or equal to 500 parts by weight of solvent per million parts by weight of polymer (ppm), or, more specifically, less than or equal to 250 ppm, or, even more specifically, less than or equal to 100 ppm. Residual solvent content may be determined by a number of methods including, for example, gas chromatography.

The stoichiometric ratio of the diamino siloxane and dianhydride in the reaction to form the siloxane oligomer determines the degree of chain extension, (d in Formula (I) +1) in the extended siloxane oligomer. For example, a stoichiometric ratio of 4 diamino siloxane to 6 dianhydride will yield a siloxane oligomer with a value for d+1 of 4. As understood by one of ordinary skill in the art, d+1 is an average value for the siloxane containing portion of the block copolymer and the value for d+1 is generally rounded to the nearest whole number. For example a value for d+1 of 4 includes values of 3.5 to 4.5.

In some embodiments d is less than or equal to 50, or, more specifically, less than or equal to 25, or, even more specifically, less than or equal to 10.

The extended siloxane oligomers described above are further reacted with non-siloxane diamines and additional dianhydrides to make the polysiloxane/polyimide block copolymer. The overall molar ratio of the total amount of dianhydride and diamine (the total of both the siloxane and non-siloxane containing diamines) used to make the polysiloxane/polyimide block copolymer should be about equal so that the copolymer can polymerize to a high molecular weight. In some embodiments the ratio of total diamine to total dianhydride is 0.9 to 1.1, or, more specifically 0.95 to 1.05. In some embodiments the polysiloxane/polyimide block copolymer will have a number average molecular weight (Mn) of 5,000 to 50,000 Daltons, or, more specifically, 10,000 to 30,000 Daltons. The additional dianhydride may be the same or different from the dianhydride used to form the extended siloxane oligomer.

The non-siloxane polyimide block comprises repeating units having the general Formula (IX): 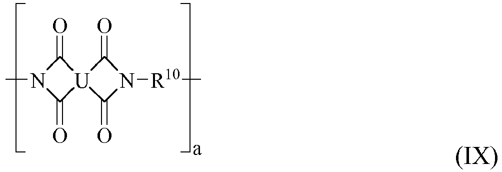 wherein a is more than 1, typically 10 to 1,000 or more, and can specifically be 10 to 500; and wherein U is a tetravalent linker without limitation, as long as the linker does not impede synthesis of the polyimide oligomer. Suitable linkers include:
(a) monocyclic groups having 5 to 50 carbon atoms and polycyclic groups having 6 to 50 carbon atoms, (b) alkyl groups having 1 to 30 carbon atoms; and combinations comprising at least one of the foregoing linkers. Suitable substitutions and/or linkers include, but are not limited to, carbocyclic groups, aryl groups, ethers, sulfones, sulfides amides, esters, and combinations comprising at least one of the foregoing. Exemplary linkers include tetravalent aromatic radicals of Formula (IV), such as: 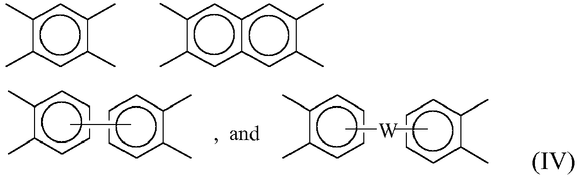 wherein W is a divalent moiety such as -O-, -S-, -C(O)-, -SO₂-, -SO-, -C_{y}H_{2y}- (y being an integer of 1 to 20), and halogenated derivatives thereof, including perfluoroalkylene groups, or a group of the Formula -O-Z-O- wherein the divalent bonds of the -O- or the - O-Z-O- group are in the 3,3', 3,4', 4,3', or the 4,4' positions, and wherein includes, divalent moieties of Formula (V) 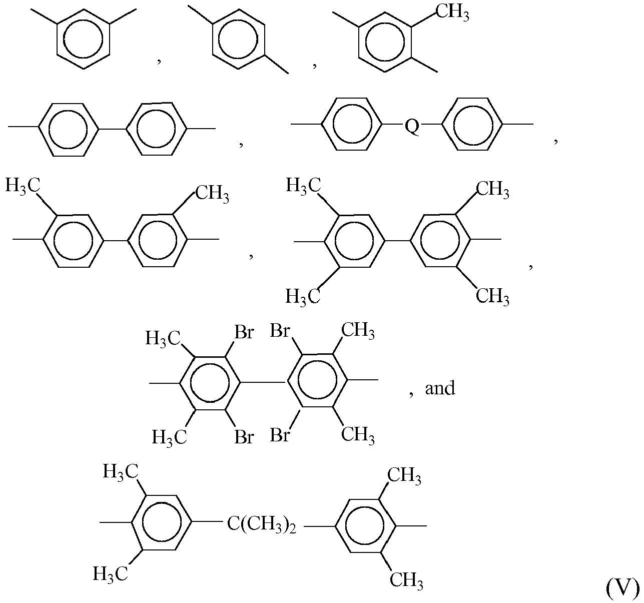 wherein Q includes, a divalent moiety comprising -O-, -S-, -C(O)-, -SO₂-, -SO-, -C_{y}H_{2y}- (y being an integer from 1 to 20), and halogenated derivatives thereof, including perfluoroalkylene groups. In some embodiments the tetravalent linker U is free of halogens.

In some embodiments V in the polysiloxane block and U in the polyimide block are the same. In some embodiments V and U are different.

R¹⁰ in formula (IX) includes substituted or unsubstituted divalent organic moieties such as: aromatic hydrocarbon moieties having 6 to 20 carbons and halogenated derivatives thereof; straight or branched chain alkylene moieties having 2 to 20 carbons; cycloalkylene moieties having 3 to 20 carbon atom; or divalent moieties of the general formula (VIII) 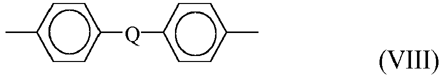 wherein Q is defined as above. In some embodiments R⁹ and R¹⁰ are the same and in some embodiments R⁹ and R¹⁰ are different.

In some embodiments the polysiloxane/polyimide block copolymer is halogen free. Halogen free is defined as having a halogen content less than or equal to 1000 parts by weight of halogen per million parts by weight of block copolymer (ppm). The amount of halogen can be determined by ordinary chemical analysis such as atomic absorption. Halogen free polymers will further have combustion products with low smoke corrosivity, for example as determined by DIN 57472 part 813. In some embodiments smoke conductivity, as judged by the change in water conductivity can be less than or equal to 1000 micro Siemens. In some embodiments the smoke has an acidity, as determined by pH, greater than or equal to 5.

In one embodiment the non-siloxane polyimide blocks comprise a polyetherimide block. Polyetherimide blocks comprise repeating units of Formula (X): 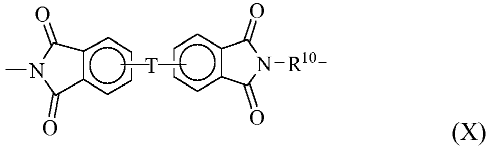 wherein T is -O-, -S-, -SO₂-, or a group of the Formula -O-Z-O- wherein the divalent bonds of the -O-, -S-, -SO₂-, or the -O-Z-O- group are in the 3,3', 3,4', 4,3', or the 4,4' positions, and wherein Z and R¹⁰ are defined as described above.

The polyetherimide block can comprise structural units according to Formula (X) wherein each R¹⁰ is independently derived from p-phenylene, m-phenylene, diamino aryl sulfone or a mixture thereof and T is a divalent moiety of the Formula (XI):

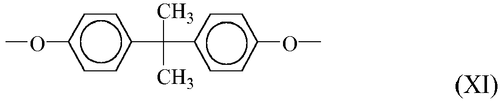

Included among the many methods of making the polyimide oligomer, particularly polyetherimide oligomers, are those disclosed in U. S. Patent Nos. 3,847,867; 3,850,885; 3,852,242; 3,855,178; 3,983,093; and 4,443,591.

The repeating units of Formula (IX) and Formula (X) are formed by the reaction of a dianhydride and a diamine. Dianhydrides useful for forming the repeating units have the Formula (XII) 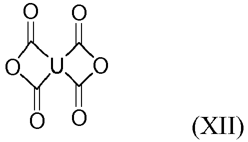 wherein U is as defined above. As mentioned above the term dianhydrides includes chemical equivalents of dianhydrides.

In one embodiment, the dianhydride comprises an aromatic bis(ether anhydride). Examples of specific aromatic bis(ether anhydride)s are disclosed, for example, in U.S. Patent Nos. 3,972,902 and 4,455,410. Illustrative examples of aromatic bis(ether anhydride)s include: 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, as well as mixtures comprising at least two of the foregoing.

Diamines useful for forming the repeating units of Formula (IX) and (X) have the Formula (XIII)

H₂N-R¹⁰-NH₂ (XIII)

wherein R¹⁰ is as defined above. Examples of specific organic diamines are disclosed, for example, in U.S. Patent Nos. 3,972,902 and 4,455,410. Exemplary diamines include ethylenediamine, propylenediamine, trimethylenediamine, diethylenetriamine, triethylenetertramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3, 5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis (4-aminophenyl) sulfone, bis(4-aminophenyl) ether and 1,3-bis(3-aminopropyl) tetramethyldisiloxane. Mixtures of these compounds may also be used. In one embodiment the diamine is an aromatic diamine, or, more specifically, m- phenylenediamine, p-phenylenediamine, sulfonyl dianiline and mixtures thereof.

In general, the reactions can be carried out employing various solvents, e.g., o-dichlorobenzene, m-cresol/toluene, and the like, to effect a reaction between the dianhydride of Formula (XII) and the diamine of Formula (XIII), at temperatures of 100°C to 250°C. Alternatively, the polyimide block or polyetherimide block can be prepared by melt polymerization or interfacial polymerization, e.g., melt polymerization of an aromatic bis(ether anhydride) and a diamine by heating a mixture of the starting materials to elevated temperatures with concurrent stirring. Generally, melt polymerizations employ temperatures of 200°C to 400°C.

A chain-terminating agent may be employed to control the molecular weight of the polysiloxane/polyimide block copolymer. Mono-functional amines such as aniline, or mono-functional anhydrides such as phthalic anhydride may be employed.

The polysiloxane/polyimide block copolymer may be made by first forming the extended siloxane oligomer and then further reacting the extended siloxane oligomer with non-siloxane diamine and dianhydride. Alternatively a non-siloxane diamine and dianhydride may be reacted to form a polyimide oligomer. The polyimide oligomer and extended siloxane oligomer can be reacted to form the polysiloxane/polyimide block copolymer.

When using a polyimide oligomer and an extended siloxane oligomer to form the block copolymer, the stoichiometric ratio of terminal anhydride functionalities to terminal amine functionalities is 0.90 to 1.10, or, more specifically, 0.95 to 1.05. In one embodiment the extended siloxane oligomer is amine terminated and the non-siloxane polyimide oligomer is anhydride terminated. In another embodiment, the extended siloxane oligomer is anhydride terminated and the non-siloxane polyimide oligomer is amine terminated. In another embodiment, the extended siloxane oligomer and the non-siloxane polyimide oligomer are both amine terminated and they are both reacted with a sufficient amount of dianhydride (as described above) to provide a copolymer of the desired molecular weight. In another embodiment, the extended siloxane oligomer and the non-siloxane polyimide oligomer are both anhydride terminated and they are both reacted with a sufficient amount of diamine (as described above) to provide a copolymer of the desired molecular weight. Reactions conditions for the polymerization of the siloxane and polyimide oligomers are similar to those required for the formation of the oligomers themselves and can be determined without undue experimentation by one of ordinary skill in the art.

The siloxane content in the block copolymer is determined by the amount of extended siloxane oligomer used during polymerization. The siloxane content can be 10 to 45 weight percent, or, more specifically, 10 to 40 weight percent, based on the total weight of the block copolymer. The siloxane content is calculated using the molecular weight of the diamino siloxane used to form the extended siloxane oligomer.

Two or more polysiloxane/polyimide block copolymers may be melt blended. The block copolymers may be used in any proportion. For example, when two block copolymers are used the weight ratio of the first block copolymer to the second block copolymer may be 1 to 99. Ternary blends and higher are also contemplated.

The composition may have a residual solvent content less than or equal to 500 parts by weight of solvent per million parts by weight of composition (ppm), or, more specifically, less than or equal to 250 ppm, or, even more specifically, less than or equal to 100 ppm.

In some embodiments the composition is halogen free. Halogen free is defined as having a halogen content less than or equal to 1000 parts by weight of halogen per million parts by weight of composition (ppm). The amount of halogen can be determined by ordinary chemical analysis such as atomic absorption. Halogen free compositions will further have combustion products with low smoke corrosivity, for example as determined by DIN 57472 part 813. In some embodiments smoke conductivity, as judged by the change in water conductivity can be less than or equal to 1000 micro Siemens. In some embodiments the smoke has an acidity, as determined by pH, greater than or equal to 5.

In some embodiments the amount of metal ions in the composition is less than or equal to 1000 parts by weight of metal ions per million parts by weight of composition (ppm), or, more specifically, less than or equal to 500 ppm or, even more specifically, the metal ion content is less than or equal to 100 ppm. Alkali and alkaline earth metal ions are of particular concern. In some embodiments the amount of alkali and alkaline earth metal ions is less than or equal to 1000 ppm in the composition and wires or cables made from them.

In some embodiments the block copolymers used in the composition may have a degree of chain extension, d+1, of 3 to 10, or, more specifically, 3 to 6.

In some embodiments, a composition comprises a first polysiloxane/polyimide block copolymer having a first siloxane content, based on the total weight of the first block copolymer, and comprising repeating units of Formula (I); and a second polysiloxane/polyimide block copolymer having a second siloxane content, based on the total weight of the second block copolymer, and comprising repeating units of Formula (I) wherein the first siloxane content does not equal the second siloxane content. By melt blending two or more polysiloxane/polyimide block copolymers with different siloxane contents compositions with intermediate siloxane contents can be made predictably and reliably. Additionally, blending two block copolymers with different siloxane contents yields compositions with unexpected impact strength.

In one embodiment a composition comprises two polysiloxane/polyimide block copolymers both comprising repeating units of Formula (I). The polysiloxane/polyimide block copolymers have different siloxane contents and different degrees of chain extension for the polysiloxane block (d+1). In another embodiment a composition comprises two polysiloxane/polyimide block copolymers both comprising repeating units of Formula (I). The polysiloxane/polyimide block copolymers have different siloxane contents but the same degree of chain extension for the polysiloxane block (d+1).

In one embodiment, a composition comprises a first polysiloxane/polyimide block copolymer having a first siloxane content, based on the total weight of the first block copolymer, and comprising repeating units of Formula (I); and a second polysiloxane/polyimide block copolymer having a second siloxane content, based on the total weight of the second block copolymer, and comprising repeating units of Formula (I) wherein the first siloxane content equals the second siloxane content and the value of d for the first polysiloxane/polyimide block copolymer does not equal the value of d for the second polysiloxane/polyimide block copolymer. These blends are visually clear.

The blending of polysiloxane/polyimide block copolymer provides a useful method to control the properties of the polysiloxane/polyimide block copolymer blend by, in some instances, attaining a property intermediate of the properties of the component polysiloxane/polyimide block copolymers. For example combining a high and low modulus polysiloxane/polyimide block copolymers gives a blend of intermediate modulus. In some embodiments copolymers of different molecular weights may be combined to produce a blend having a melt flow value needed in subsequent extrusion and molding operations. In terms of Izod impact such blends give surprisingly high impact strength.

The blends may further contain fillers and reinforcements for example fiber glass, milled glass, glass beads, and flake. Minerals such as talc, wollastonite, mica, kaolin or montmorillonite clay, silica, quartz, barite, and combinations of two or more of the foregoing may be added. The compositions can comprise inorganic fillers, such as, for example, carbon fibers and nanotubes, metal fibers, metal powders, conductive carbon, and other additives including nano-scale reinforcements as well as combinations of inorganic fillers.

Other additives include, UV absorbers; stabilizers such as light stabilizers and others; lubricants; plasticizers; pigments; dyes; colorants; anti-static agents; foaming agents; blowing agents; metal deactivators, and combinations comprising one or more of the foregoing additives. Antioxidants can be compounds such as phosphites, phosphonites and hindered phenols or mixtures thereof. Phosphorus containing stabilizers including triaryl phosphite and aryl phosphonates are of note as useful additives. Difunctional phosphorus containing compounds can also be employed. Stabilizers may have a molecular weight greater than or equal to 300. In some embodiments, phosphorus containing stabilizers with a molecular weight greater than or equal to 500 are useful. Phosphorus containing stabilizers are typically present in the composition at 0.05-0.5% by weight of the formulation. Flow aids and mold release compounds are also contemplated.

The composition can be prepared melt mixing or a combination of dry blending and melt mixing. Melt mixing can be performed in single or twin screw type extruders or similar mixing devices which can apply a shear and heat to the components. Melt mixing can be performed at temperatures greater than or equal to the melting temperatures of the block copolymers and less than the degradation temperatures of either of the block copolymers.

All of the ingredients may be added initially to the processing system. In some embodiments, the ingredients may be added sequentially or through the use of one or more master batches. It can be advantageous to apply a vacuum to the melt through one or more vent ports in the extruder to remove volatile impurities in the composition.

In one embodiment the composition comprises a reaction product of melt mixing the block copolymers.

In some embodiments melt mixing is performed using an extruder and the composition exits the extruder in a strand or multiple strands. The shape of the strand is dependent upon the shape of the die used and has no particular limitation.

The composition can be formed into a desired article such as a film and irradiated with a dosage of 16 to 130, or, more specifically, 32 to 64 megaGrays. Techniques for irradiation are known the art and include e-beam techniques. The irradiation results in crosslinking within the siloxane domains of the copolymer. The cross linked material shows a surprising increase in heat distortion temperature and E' modulus.

In some embodiments the cross linked material has an E' modulus at 200°C of 20 to 100 megaPascals and a heat distortion temperature of 180 to 210°C at 0.44 megaPascals as determined by ASTM D4065-01 at a thickness of 300 micrometers. In some embodiments the cross linked material has an E' modulus at 200°C of 5 to 20 megaPascals and a heat distortion temperature of 90 to 150°C at 0.44 megaPascals as determined by ASTM D4065-01 at a thickness of 300 micrometers.

In one embodiment, a conductive wire comprises a conductor and a covering disposed over the conductor. The covering comprises a composition and the composition comprises a cross linked polysiloxane/polyimide block copolymer as described above. The composition is applied to the conductor by a suitable method such as extrusion coating to form a covered conductor such as a coated wire. For example, a coating extruder equipped with a screw, crosshead, breaker plate, distributor, nipple, and die can be used. The melted composition forms a covering disposed over a circumference of the conductor. Extrusion coating may employ a single taper die, a double taper die, other appropriate die or combination of dies to position the conductor centrally and avoid die lip build up.

In some embodiments it may be useful to dry the composition before extrusion coating. Exemplary drying conditions are 60 to 120°C for 2 to 20 hours. Additionally, in one embodiment, during extrusion coating, the composition is melt filtered, prior to formation of the coating, through one or more filters. In some embodiments the composition will have substantially no particles greater than 80 micrometers in size. In some embodiments any particulates present will be less than or equal to 40 micrometers in size. In some embodiments there will be substantially no particulates greater than 20 micrometers in size. The presence and size of particulates can be determined using a solution of 1 gram of composition dissolved in 10 milliliters of a solvent, such as chloroform, and analyzing it using microscopy or light scattering techniques. Substantially no particulates is defined as having less than or equal to 3 particulates, or, more specifically, less than or equal to 2 particulates, or, even more specifically, less than or equal to 1 particulate per one gram sample. Low levels of particulates are beneficial for giving a layer of insulation on a conductive wire that will not have electrically conductive defects as well as giving coatings with improved mechanical properties, for instance elongation.

The extruder temperature during extrusion coating is generally less than the degradation temperature of the block copolymer. Additionally the processing temperature is adjusted to provide a sufficiently fluid molten composition to afford a covering for the conductor, for example, higher than the softening point of The composition, or more specifically at least 30°C higher than the melting point of The composition.

After extrusion coating the covered conductor is usually cooled using a water bath, water spray, air jets or a combination comprising one or more of the foregoing cooling methods. Exemplary water bath temperatures are 20 to 85°C. After the covered conductor is cooled and optionally dried it is irradiated with a dosage of 16 to 130, or, more specifically, 32 to 64 megaGrays to form a cross linked covering.

In one embodiment, the composition is applied to the conductor to form a covering disposed over and in physical contact with the conductor. Additional layers may be applied to the covering. Methods of coating a conductor which may be used are well known in the art and are discussed for example in U.S. Patent Nos.: 4,588,546 to Feil et al.; 4,038,237 to Snyder et al.; 3,986,477 to Bigland et al.; and, 4,414,355 to Pokorny et al.

In one embodiment the composition is applied to a conductor having one or more intervening layers between the conductor and the covering to form a covering disposed over the conductor. For instance, an optional adhesion promoting layer may be disposed between the conductor and covering. In another example the conductor may be coated with a metal deactivator prior to applying the covering. Alternatively, a metal deactivator can be mixed with the polysiloxane/polyimide block copolymers. In another example the intervening layer comprises a thermoset composition that, in some cases, is foamed.

The conductor may comprise a single strand or a plurality of strands. In some cases, a plurality of strands may be bundled, twisted, braided, or a combination of the foregoing to form a conductor. Additionally, the conductor may have various shapes such as round or oblong. Suitable conductors include, but are not limited to, copper wire, aluminum wire, lead wire, and wires of alloys comprising one or more of the foregoing metals. The conductor may also be coated with, e.g., tin, gold or silver. In some embodiments the conductor comprises optical fibers.

The cross-sectional area of the conductor and thickness of the covering may vary and is typically determined by the end use of the conductive wire. The conductive wire can be used as conductive wire, including, for example, for harness wire for automobiles, wire for household electrical appliances, wire for electric power, wire for instruments, wire for information communication, wire for electric cars, as well as ships, and airplanes.

In some embodiments the covering may have a thickness of 0.01 to 10 millimeters (mm) or, more specifically, 0.05 to 5 mm, or, even more specifically 1 to 3 mm.

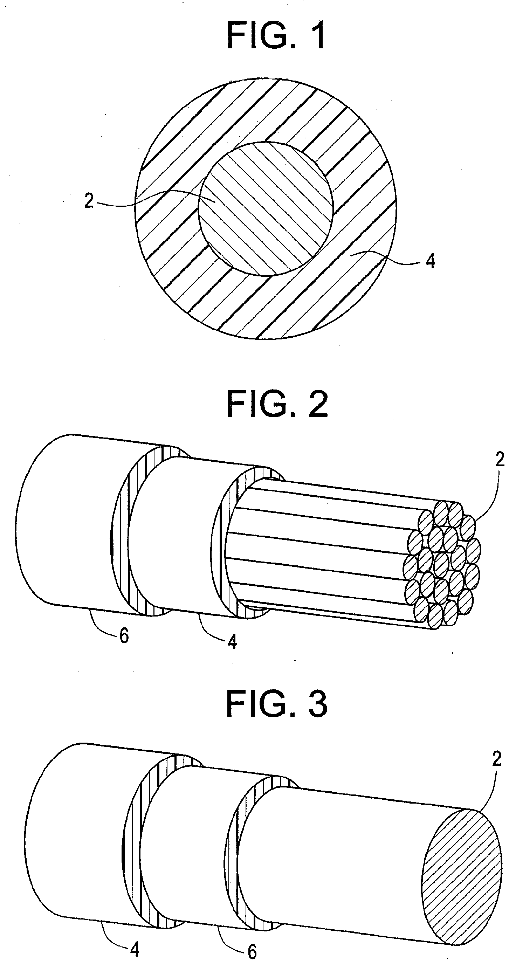

A cross-section of an exemplary conductive wire is seen in Figure 1. Figure 1 shows a covering, 4, disposed over a conductor, 2. In one embodiment, the covering, 4, comprises a foamed composition. Perspective views of exemplary conductive wires are shown in Figures 2 and 3. Figure 2 shows a covering, 4, disposed over a conductor, 2, comprising a plurality of strands and an optional additional layer, 6, disposed over the covering, 4, and the conductor, 2. In one embodiment, the covering, 4, comprises a foamed composition. Conductor, 2, can also comprise a unitary conductor. Figure 3 shows a covering, 4, disposed over a unitary conductor, 2, and an intervening layer, 6. In one embodiment, the intervening layer, 6, comprises a foamed composition. Conductor, 2, can also comprise a plurality of strands.

Multiple conductive wires may be combined to form a cable. The cable may comprise additional protective elements, structural elements, or a combination thereof. An exemplary protective element is a jacket which surrounds the group of conductive wires. The jacket and the covering on the conductive wires, singly or in combination, may comprise the composition described herein. A structural element is a typically non conductive portion which provides additional stiffness, strength, shape retention capability or the like.

A color concentrate or master batch may be added to the composition prior to or during extrusion coating. When a color concentrate is used it is typically present in an amount less than or equal to 3 weight percent, based on the total weight of the composition. In one embodiment the master batch comprises a polysiloxane/polyimide block copolymer.

Further information is provided by the following non-limiting examples.

### EXAMPLES

The following materials were used in the examples:
PEI-PDMS-1: A polysiloxane/polyetherimide block copolymer having extended polysiloxane blocks and 20 wt % siloxane based on the total weight of the block copolymer.
PEI-PDMS-2: A polysiloxane/polyetherimide block copolymer having extended polysiloxane blocks and 40 wt% siloxane based on the total weight of the block copolymer.
PEI-PDMS-3: A blend of PEI-PDMS-1 and PEI-PDMS-2 (in a 1:1 weight ratio) which contains 30 wt% siloxane.

The following examples show the effect of cross linking using e-beam radiation, particularly at high radiation levels, on polysiloxane/polyetherimide block copolymer having extended polysiloxane blocks. Cross linking improves heat deflection temperature (HDT), retention of stiffness (a higher E' modulus) at higher temperatures and a reduction in the coefficient of thermal expansion (CTE).

### Examples 1-8

PEI-PDMS-1, PEI-PDMS-2 and PEI-PDMS-3 were solvent cast to form films having a thickness of 300 micrometers. The solvent cast films were exposed to varying amounts of e-beam radiation levels. After irradiation the films were dissolved in dichloromethane and the percent solubles was measured using gel permeation chromatography (GPC). Results are shown in Table 1. Amount of solubles is expressed in weight percent based on the total weight of the film sample. Higher levels of solubles indicate less cross linking. Radiation levels are expressed in megaGrays (MGy).

**Table 1.**

| | 1 | 2 | 3 | 4 |
|---|---|---|---|---|
| Radiation Levels (MGy) | 0 | 32 | 64 | 128 |
| PEI-PDMS -1 (wt % soluble's) | 100 | 27 | 22 | 16 |
| PEI-PDMS -2 (wt % soluble's) | 100 | 8 | 7 | 7 |
| PEI-PDMS -3 (wt % soluble's) | 100 | 56 | 47 | - |

### Examples 5-8

PEI-PDMS-1 and PEI-PDMS-2 were solvent cast to form films having a thickness of 300 micrometers. The solvent cast films were exposed to varying amounts of e-beam radiation levels. Dynamic mechanical analysis was performed on the films as per ASTM D4065-01 and the heat distortion temperature (HDT) was calculated as described in Polymer Engineering and Science, Nov, 1979, Vol. 19, No. 15, pages 1104-1109. Results are shown in Table 2. Heat distortion temperature is expressed in °C at two different stress levels - 0.44 megaPascals (MPa) and 1.8 MPa. Radiation levels are expressed in megaGrays (MGy).

**Table 2.**

| | 5 | 6 | 7 | 8 |
|---|---|---|---|---|
| Radiation Levels | 0 | 32 | 64 | 128 |
| PEI-PDMS-1 (HDT at 0.44 MPa) | 179.1 | 185.13 | 188.13 | 196.9 |
| PEI-PDMS-1 (HDT at 1.8 MPa) | 123.83 | 147.28 | 152.87 | 176.27 |
| PEI-PDMS -2 (HDT at 0.44MPa) | 50.06 | 95.227 | 126.64 | 167.55 |
| PEI-PDMS -2 (HDT at 1.8MPa) | * | 40.18 | 86.2 | 120.98 |

| | | | | |
|---|---|---|---|---|
| *Not possible to measure HDT due to sample softening. | | | | |

Table 2 shows the improvement in the heat distortion temperature after cross linking. The copolymers having extended siloxane blocks show a dramatic increase in the heat distortion temperature at both stress levels and at both levels of siloxane content. For PEI-PDMS-1, which contains 20 wt% siloxane, cross linking results in an increase of almost 20°C at the 0.44 MPa stress level and an increase of over 50°C at the 1.8 MPa stress level. For PEI-PDMS-2 the heat distortion temperature is more than tripled with cross linking at both stress levels.

### Examples 9-16

PEI-PDMS-1 and PEI-PDMS-2 were solvent cast to form films having a thickness of 300 micrometers. The solvent cast films were exposed to varying amounts of e-beam radiation levels. Dynamic Mechanical Analysis was performed on the films as per ASTM D4065-01 to determine the E' modulus value at different temperatures. Results for PEI-PDMS-1 are shown in Table 3 and results for PEI-PDMS-2 are shown in Table 4. E' modulus values are expressed in megaPascals. Radiation levels are expressed in megaGrays (MGy).

**Table 3.**

| | 9 | 10 | 11 | 12 |
|---|---|---|---|---|
| Radiation Levels | 0 | 32 | 64 | 128 |
| 30°C | 1520.00 | 1910.00 | 2200.00 | 2190.00 |
| 100°C | 864.00 | 1240.00 | 1240.00 | 1530.00 |
| 150 | 515.00 | 685.00 | 747.00 | 1090.00 |
| 175 | 228.00 | 338.00 | 404.00 | 752.00 |
| 200 | 1.84 | 27.30 | 55.00 | 144.00 |
| 225 | * | 8.17 | 13.40 | 25.30 |
| 240 | * | 4.93 | 8.59 | 14.20 |

| | | | | |
|---|---|---|---|---|
| *Not possible to measure E' modulus due to sample softening. | | | | |

**Table 4.**

| | 13 | 14 | 15 | 16 |
|---|---|---|---|---|
| Radiation Levels | 0 | 32 | 64 | 128 |
| 30°C | 312.00 | 723.00 | 1330.00 | 1750.00 |
| 75°C | 116.00 | 396.00 | 822.00 | 1190.00 |
| 100°C | 62.90 | 170.00 | 508.00 | 917.00 |
| 125°C | 28.80 | 71.50 | 218.00 | 662.00 |
| 150°C | 8.95 | 30.80 | 77.10 | 405.00 |
| 175°C | * | 12.70 | 25.70 | 111.00 |
| 200°C | * | 7.50 | 15.00 | 33.80 |
| 225°C | * | * | 13.30 | 27.10 |
| 240°C | * | * | 12.60 | 26.40 |

| | | | | |
|---|---|---|---|---|
| *Not possible to measure E' modulus due to sample softening. | | | | |

Table 3 and Table 4 summarize the improvement in modulus (increase in stiffness) for temperatures ranging from 30°C to 240°C with an increase in the amount of cross linking for the block copolymers having extended siloxane blocks. As a result of the increased modulus the cross linked composition has a greater load bearing capacity than the uncross linked composition.

## Claims

1. A composition comprising:
a cross linked polysiloxane/polyimide block copolymer having a siloxane content of 10 to 45 weight percent, based on the total weight of the block copolymer,
wherein the cross linked polysiloxane/polyimide block copolymer has a heat distortion temperature measured at 0.44 megaPascals that is at least 5 degrees Celsius greater than the heat distortion temperature of the polysiloxane/polyimide block copolymer prior to cross linking,
wherein the cross linked polysiloxane/polyimide block copolymer has an E' modulus measured at 30 degrees Celsius that is greater than or equal to 115% of the E' modulus measured at 30 degrees Celsius of the polysiloxane/polyimide prior to cross linking,
wherein the polysiloxane/polyimide block copolymer comprises a non-siloxane polyimide block comprising repeating units of Formula (IX) 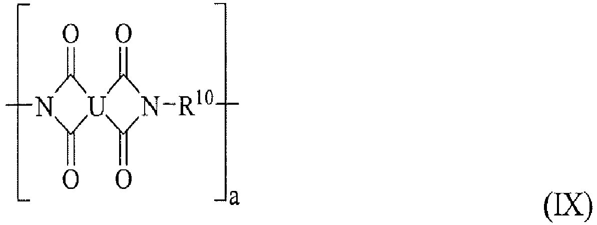 wherein a is more than 1, U is a tetravalent linker comprising a monocyclic group having 5 to 50 carbon atoms, a polycyclic group having 6 to 50 carbon atoms, an alkyl group having 1 to 30 carbon atoms or a combination thereof, and R¹⁰ comprises an aromatic hydrocarbon having 6 to 20 carbon atoms, alkylene groups having 2 to 20 carbons, cycloalkylene groups having 3 to 20 carbon atoms or divalent moieties of Formula (VIII) 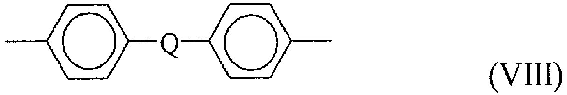 wherein Q is a divalent group comprising -O-, -S-, -C(O)-, -SO₂-, -SO-, - C₂H_{2y}- and y is an integer from 1 to 20, and an extended siloxane block comprising repeating units of Formula (I) 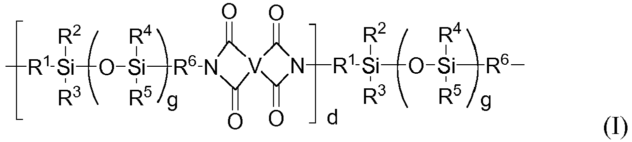
wherein R¹⁻⁶ are independently at each occurrence selected from the group consisting of monocyclic groups having 5 to 45 carbon atoms, polycyclic groups having 10 to 45 carbon atoms, alkyl groups having 1 to 30 carbon atoms and alkenyl groups having 2 to 30 carbon atoms,
V is a tetravalent linker selected from the group consisting of monocyclic groups having 5 to 50 carbon atoms, polycyclic groups having 6 to 50 carbon atoms, alkyl groups having 1 to 30 carbon atoms, alkenyl groups having 2 to 30 carbon atoms and combinations comprising at least one of the foregoing linkers,
g equals 1 to 30, and
d is greater than or equal to 1, wherein E' modulus is determined according to ASTM D4065-01.

2. The composition as claimed in claim 1, comprising a blend of polysiloxane/polyimide block copolymers wherein the first polysiloxane/polyimide block copolymer has a first siloxane content, based on the total weight of the first block copolymer, and comprises repeating units of Formula (I); and the second polysiloxane/polyimide block copolymer has a second siloxane content, based on the total weight of the second block copolymer, and comprises repeating units of Formula (I) wherein the first siloxane content does not equal the second siloxane content.

3. The composition according to claim 2, wherein the different siloxane contents have different degrees of chain extension for the polysiloxane block (d+1).

4. The composition according to claim 2, wherein the different siloxane contents have the same degree of chain extension for the polysiloxane block (d+1).

5. The composition of any of Claims 1 -4, wherein the block copolymer is halogen free.

6. The composition of any of Claims 1 -5, wherein the non-siloxane polyimide block comprises repeating units of Formula (X) 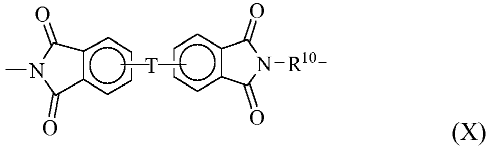 wherein each R¹⁰ is independently derived from p-phenylene, m-phenylene, diamino aryl sulfone or a mixture thereof and T is a divalent radical of the Formula (XI):

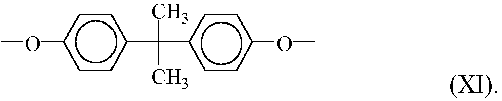

7. The composition of any of Claims 1 -6, wherein R²⁻⁵ are methyl groups and R¹ and R⁶ are alkylene groups.

8. The composition of any of Claims 1 -7, wherein R¹ and R⁶ are alkylene groups having 3 to 10 carbons.

9. The composition of any of Claims 1 -8, wherein d+1 has a value of 3 to 10.

10. An article comprising the composition according to any one of claims 1-9.

## Patentansprüche

1. Zusammensetzung, die Folgendes umfasst:
ein vernetztes Polysiloxan/Polyimid-Blockcopolymer, das einen Siloxangehalt von 10 bis 45 Gewichtsprozent, bezogen auf das Gesamtgewicht der Blockcopolymers, aufweist,
wobei das vernetzte Polysiloxan/Polyimid-Blockcopolymer Grundeinheiten eine bei 0,44 Megapascal gemessene Formbeständigkeitstemperatur aufweist, die um mindestens 5 Grad Celsius höher als die Formbeständigkeitstemperatur des Polysiloxan/Polyimid-Blockcopolymers vor dem Vernetzen ist,
wobei das vernetzte Polysiloxan/Polyimid-Blockcopolymer einen bei 30 Grad Celsius gemessenen Elastizitätsmodul E' aufweist, der größer gleich 115 % des bei 30 Grad gemessenen Elastizitätsmoduls E' des Polysiloxan/Polyimid-Blockcopolymers vor dem Vernetzen ist,
wobei das Polysiloxan/Polyimid-Blockcopolymers einen Nicht-Siloxan-Polyimid-Block umfasst, der Grundeinheiten der Formel (IX) umfasst: 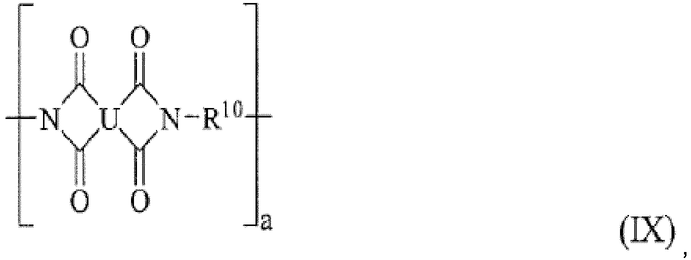 wobei a mehr als 1 ist, U ein vierwertiger Linker ist, der eine monocyclische Gruppe mit 5 bis 50 Kohlenstoffatomen, eine polycyclische Gruppe mit 6 bis 50 Kohlenstoffatomen, eine Alkylgruppe mit 1 bis 30 Kohlenstoffatomen oder eine Kombination davon umfasst, und R¹⁰ einen aromatischen Kohlenwasserstoff mit 6 bis 20 Kohlenstoffatomen, Alkylengruppen mit 2 bis 20 Kohlenstoffen, Cycloalkylengruppen mit 3 bis 20 Kohlenstoffatomen oder zweiwertige Einheiten der Formel (VIII) umfasst: 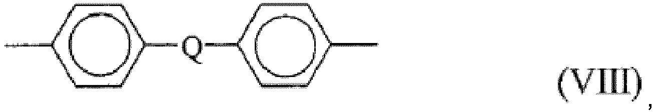
wobei Q eine zweiwertige Gruppe ist, die -O-, -S-, -C(O)-, -SO₂-, -SO-, -C₂H_{2y}- umfasst, und y eine ganze Zahl von 1 bis 20 ist, und einen verlängerten Siloxan-Block, der Grundeinheiten der Formel (I) umfasst: 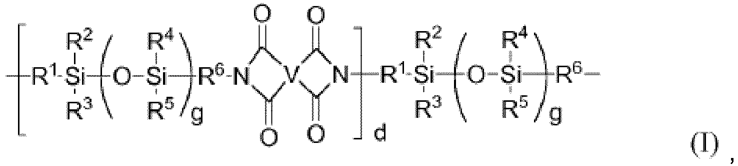
wobei R¹⁻⁶ unabhängig bei jedem Auftreten aus der Gruppe bestehend aus monocyclischen Gruppen mit 5 bis 45 Kohlenstoffatomen, polycyclischen Gruppen mit 10 bis 45 Kohlenstoffatomen, Alkylgruppen mit 1 bis 30 Kohlenstoffatomen und Alkenylgruppen mit 2 bis 30 Kohlenstoffatomen ausgewählt sind,
V ein vierwertiger Linker ist, der aus der Gruppe bestehend aus monocyclischen Gruppen mit 5 bis 50 Kohlenstoffatomen, polycyclischen Gruppen mit 6 bis 50 Kohlenstoffatomen, Alkylgruppen mit 1 bis 30 Kohlenstoffatomen, Alkenylgruppen mit 2 bis 30 Kohlenstoffatomen und Kombinationen, die mindestens einen der vorstehenden Linker umfassen, ausgewählt ist,
g gleich 1 bis 30 ist und
d größer gleich 1 ist, wobei das Elastizitätsmodul E' gemäß ASTM D-4065-01 gemessen wird.

2. Zusammensetzung nach Anspruch 1, die eine Mischung von Polysiloxan/Polyimid-Blockcopolymeren umfasst, wobei das erste Polysiloxan/Polyimid-Blockcopolymer einen ersten Siloxangehalt, bezogen auf das Gesamtgewicht des ersten Blockcopolymers, aufweist und Grundeinheiten der Formel (I) umfasst und das zweite Polysiloxan/Polyimid-Blockcopolymer einen zweiten Siloxangehalt, bezogen auf das Gesamtgewicht des zweiten Blockcopolymers, aufweist und Grundeinheiten der Formel (I) umfasst, wobei der erste Siloxangehalt nicht dem zweiten Siloxangehalt entspricht.

3. Zusammensetzung nach Anspruch 2, wobei die unterschiedlichen Siloxangehalte unterschiedliche Kettenverlängerungsgrade für den Polysiloxan-Block (d+1) aufweisen.

4. Zusammensetzung nach Anspruch 2, wobei die unterschiedlichen Siloxangehalte den gleichen Kettenverlängerungsgrad für den Polysiloxan-Block (d+1) aufweisen.

5. Zusammensetzung nach einem der Ansprüche 1-4, wobei das Blockcopolymer halogenfrei ist.

6. Zusammensetzung nach einem der Ansprüche 1-5, wobei der Nicht-Siloxan-Polyimid-Block Grundeinheiten der Formel (X) umfasst: 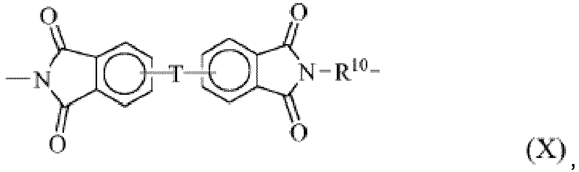 wobei jedes R¹⁰ unabhängig von p-Phenylen, m-Phenylen, Diaminoarylsulfon oder einem Gemisch davon abgeleitet ist und T ein zweiwertiges Radikal der Formel (XI) ist:

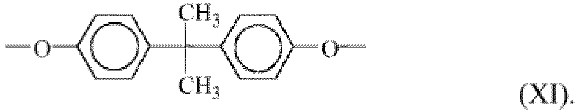

7. Zusammensetzung nach einem der Ansprüche 1-6, wobei R²⁻⁵ Methylgruppen sind und R¹ und R⁶ Alkylengruppen sind.

8. Zusammensetzung nach einem der Ansprüche 1-7, wobei R¹ und R⁶ Alkylengruppen mit 3 bis 10 Kohlenstoffen sind.

9. Zusammensetzung nach einem der Ansprüche 1-8, wobei d+1 einen Wert von 3 bis 10 hat.

10. Artikel, der die Zusammensetzung nach einem der Ansprüche 1-9 umfasst.

## Revendications

1. Composition comprenant :
un copolymère séquencé réticulé de polysiloxane/polyimide possédant une teneur en siloxane de 10 à 45 % en poids basés sur le poids total du copolymère séquencé ;
dans laquelle le copolymère séquencé réticulé de polysiloxane/polyimide possède une température de déformation à chaud mesurée à 0,44 mégapascal qui est supérieure à concurrence d'au moins 5 °C à la température de déformation à chaud du copolymère séquencé de polysiloxane/polyimide avant la réticulation ;
dans laquelle le copolymère séquencé réticulé de polysiloxane/polyimide possède un module E' mesuré à 30 °C qui est supérieur ou égal à 115 % du module E' mesuré à 30 °C du polysiloxane/polyimide avant la réticulation ;
dans laquelle le copolymère séquencé de polysiloxane/polyimide comprend une séquence de non siloxane polyimide comprenant des unités récurrentes répondant à la formule (IX) 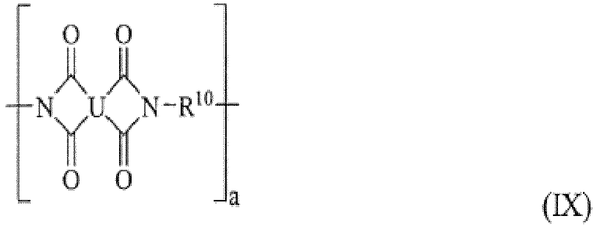
dans laquelle a est supérieur à 1, U représente un lieur tétravalent comprenant un groupe monocyclique contenant de 5 à 50 atomes de carbone, un groupe polycyclique contenant de 6 à 50 atomes de carbone, un groupe alkyle contenant de 1 à 30 atomes de carbone ou une de leurs combinaisons, et R¹⁰ comprend un hydrocarbure aromatique contenant de 6 à 20 atomes de carbone, des groupes alkylène contenant de 2 à 20 atomes de carbone, des groupes cycloalkylène contenant de 3 à 20 atomes de carbone ou des fractions divalentes répondant à la formule (VIII) : 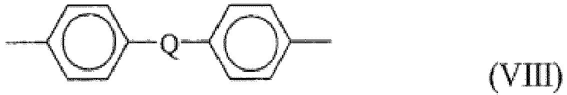
dans laquelle Q représente un groupe divalent comprenant un atome d'oxygène, un atome de soufre, un groupe -C(O)-, un groupe -SO₂-, un groupe -SO-, un groupe -C₂H_{2y}- et y représente un entier de 1 à 20, et une séquence étendue de siloxane comprenant des unités récurrentes répondant à la formule (I) 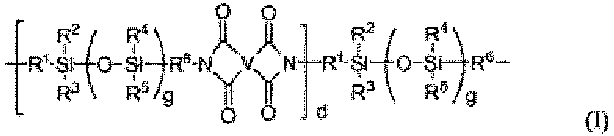
dans laquelle R¹⁻⁶ sont choisis de manière indépendante, à chaque occurrence, parmi le groupe constitué par des groupes monocycliques contenant de 5 à 45 atomes de carbone, des groupes polycycliques contenant de 10 à 45 atomes de carbone, des groupes alkyle contenant de 1 à 30 atomes de carbone et des groupes alcényle contenant de 2 à 30 atomes de carbone,
V représente un lieur tétravalent choisi parmi le groupe constitué par des groupes monocycliques contenant de 5 à 50 atomes de carbone, des groupes polycycliques contenant de 6 à 50 atomes de carbone, des groupes alkyle contenant de 1 à 30 atomes de carbone, des groupes alcényle contenant de 2 à 30 atomes de carbone et des combinaisons comprenant au moins un des lieurs susmentionnés,
g est égal à 1 - 30, et
d est supérieur ou égal à 1, le module E' étant déterminé conformément à la norme ASTM D4065-01.

2. Composition selon la revendication 1, comprenant un mélange de copolymères séquencés de polysiloxane/polyimide, dans laquelle le premier copolymère séquencé de polysiloxane/polyimide possède une première teneur en siloxane basée sur le poids total du premier copolymère séquencé et comprend des unités récurrentes répondant à la formule (I) et le second copolymère séquencé de polysiloxane/polyimide possède une seconde teneur en siloxane basée sur le poids total du second copolymère séquencé et comprend des unités récurrentes répondant à la formule (I), la première teneur en siloxane n'étant pas égale à la seconde teneur en siloxane.

3. Composition selon la revendication 2, dans laquelle les différentes teneurs en siloxane possèdent des degrés différents d'extension de chaîne pour la séquence de polysiloxane (d+1).

4. Composition selon la revendication 2, dans laquelle les différentes teneurs en siloxane possèdent le même degré d'extension de chaîne pour la séquence de polysiloxane (d+1).

5. Composition selon l'une quelconque des revendications 1 à 4, dans laquelle le copolymère séquencé est exempt d'atomes d'halogène.

6. Composition selon l'une quelconque des revendications 1 à 5, dans laquelle la séquence de non siloxane polyimide comprend des unités récurrentes répondant à la formule (X) 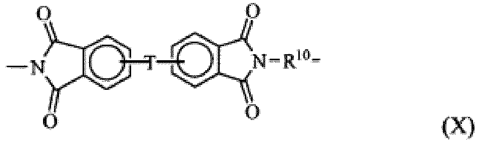 dans laquelle R¹⁰ dérive de manière indépendante d'un groupe p-phénylène, d'un groupe m-phénylène, d'une diaminoarylsulfone ou d'un de leurs mélanges, et T représente un radical divalent répondant à la formule (XI) :

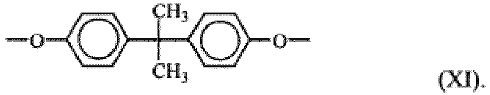

7. Composition selon l'une quelconque des revendications 1 à 6, dans laquelle R²⁻⁵ représentent des groupes méthyle et R¹ et R⁶ représentent des groupes alkylène.

8. Composition selon l'une quelconque des revendications 1 à 7, dans laquelle R¹ et R⁶ représentent des groupes alkylène contenant de 3 à 10 atomes de carbone.

9. Composition selon l'une quelconque des revendications 1 à 8, dans laquelle d+1 possède une valeur de 3 à 10.

10. Article comprenant la composition selon l'une quelconque des revendications 1 à 9.
